# EUROPÄISCHE PATENTSCHRIFT

(11) **EP 1 239 998 B1**
(45) Veröffentlichungstag und Bekanntmachung des Hinweises auf die Patenterteilung: **02.06.2004**
(21) Anmeldenummer: 00987086.6
(22) Anmeldetag: 04.11.2000
(51) Int. Cl.: B29C 45/27

(54) **HEISSKANAL-VERTEILER-SYSTEM**
HOT RUNNER DISTRIBUTOR SYSTEM
SYSTEME DISTRIBUTEUR POUR CANAUX CHAUFFANTS

(30) Priorität: 24.11.1999 DE 19956554
(43) Veröffentlichungstag der Anmeldung: 18.09.2002
(73) Patentinhaber: MHT Mold & Hotrunner Technology AG, 65239 Hochheim am Main (DE)
(72) Erfinder: PLASS, Werner, 65760 Eschborn (DE); RUF, Stefan, 65207 Auringen (DE)
(74) Vertreter: Weber, Dieter, Dr.
(86) Internationale Anmeldenummer: PCT/DE2000/003889
(87) Internationale Veröffentlichungsnummer: WO 2001/038067

(56) Entgegenhaltungen:
- EP-A- 0 816 044
- US-A- 3 812 228
- US-A- 4 219 323
- US-A- 5 030 084
- US-A- 5 792 493
- US-A- 5 843 361

## Beschreibung

Die vorliegende Erfindung betrifft ein Heißkanal-Verteilersystem für eine Spritzgußform zum gleichzeitigen Spritzgießen mehrerer Teile oder großer Teile mit einer Mehrzahl von Einspritzdüsen bzw. -öffnungen, die dafür ausgelegt sind, im wesentlichen gleichzeitig Spritzgußmasse unter hohem Druck und bei hohen Temperaturen in vorgegebene Formbereiche abzugeben, wobei die Formbereiche mindestens teilweise an voneinander getrennten Hauptverteilem vorgesehen sind, die Heißkanäle aufweisen und die über Vorverteiler, welche ihrerseits Heißkanäle aufweisen, miteinander und mit einem Anguß für die Spritzgußmasse verbunden sind. Ein solches Heißkanal-Verteilersystem ist im Oberbegriff des anliegenden Anspruchs 1 offenbart und z.B. aus der EP-A-0 816 044 bekannt.

Entsprechende Heißkanal-Verteilersysteme und Spritzgußformen sind schon seit langem im Stand der Technik bekannt, insbesondere sind entsprechende Spritzgußformen bekannt als Formen für die Herstellung der Rohlinge von PET-Flaschen, d.h. von Vorformen, die aus zunächst noch relativ dickwandigen PET-Röhrchen bestehen, die im Vergleich zu den endgültigen PET-Flaschen, die sehr unterschiedliche Formen haben können, ein relativ kleines Volumen haben und durchweg gleich geformt sind. Die vorliegende Erfindung bezieht sich insbesondere auf solche Heißkanal-Verteilersysteme für Spritzgußformen zur Herstellung von PET-Rohlingen, ist jedoch ohne weiteres auch auf Heißkanal-Verteilersyteme für andere Spritzgußformen anwendbar, insbesondere soweit diese zur Herstellung einer Vielzahl identischer Teile in einer Form gedacht sind oder aber zur Herstellung sehr großer Formen mit einer Mehrzahl von Einspritzdüsen bzw. Einspritzöffnungen ausgestattet sind.

Entsprechend der Größe und Vielzahl von Teilen, die mit solchen Formen hergestellt werden, sind die Heißkanal-Verteilersysteme für diese Formen relativ groß und schwer. Damit im Falle mehrerer gleichartiger Produkte alle hergestellten Formteile die gleiche Qualität und Beschaffenheit haben, ist es notwendig, daß an allen Einspritzdüsen bzw. Einspritzöffnungen während des Einspritzens der Formmasse exakt die gleichen Bedingungen herrschen, d.h. gleiche Temperatur und gleicher Druck der Spritzgußmasse. Dies bedeutet wiederum, daß die Spritzgußmasse auf ihrem Weg zu den Einspritzöffnungen nur möglichst wenig Temperatur- und Druckverluste haben darf. Außerdem sollten die Wege der Spritzgußmasse von einem Anguß, der unmittelbar mit einem Vorratstank oder dergleichen für die Spritzgußmasse verbunden ist, bis hin zu den Einspritzöffnungen bzw. -düsen möglichst gleichartig beschaffen und möglichst auch gleich lang sein.

Ein weiteres Problem bei der Verwendung großer Spritzgußformen für entsprechend große Teile bzw. für eine entsprechend große Anzahl einzelner, kleinerer Teile liegt in der thermischen Ausdehnung, der die einzelnen Elemente der Form und der Zuführsysteme bzw. Vorverteiler für das schmelzflüssige Spritzgußmaterial notwendigerweise unterliegen. Eine Kühlung ist nur begrenzt möglich, da das Spritzgußmaterial sich bei zu starker Kühlung lokal verfestigen könnte und damit Kanäle oder Spritzgußdüsen verstopft werden könnten. Statt dessen werden Spritzgußdüsen in vielen Fällen sogar aktiv geheizt, um auf jeden Fall eine zu frühzeitige Verfestigung des aus den Düsen austretenden Spritzgußmaterials zu verhindern. Die Temperatur. des Spritzgußmaterials kann in der Größenordnung von 200 bis 300°C liegen, so daß aufgrund der starken Temperaturdifferenz gegenüber Zimmertemperatur auch die thermische Ausdehnung beträchtlich ist und selbst durch Verwendung von Materialien geringer Wärmeausdehnung nicht vollständig zu verhindern ist. Dies ist einer der Gründe dafür, warum entsprechende große Formen mehrteilig hergestellt werden, wobei die einzelnen Formteile und die entsprechenden, zugehörigen Hauptverteiler nicht starr miteinander verbunden sind, sondern ihrerseits nur an einem oder wenigen Punkten fixiert sind und gegeneinander Spiel haben, so daß die thermische Ausdehnung des einen Hauptverteilers nicht die Position eines anderen, benachbarten Hauptverteilers beeinflußt.

Aus demselben Grunde wurden die einzelnen Hauptverteiler und die Zuführsysteme, d.h. die bereits erwähnten Vorverteiler, bisher in unterschiedlichen Ebenen angeordnet. Da einerseits die einzelnen Hauptverteiler von einem zentralen Anguß her mit dem Spritzgußmaterial versorgt werden und insofern indirekt über Vorverteiter miteinander verbunden sein müssen; eine starre Verbindung innerhalb einer Ebene jedoch zu entsprechend großen Relatiwerschiebungen entfernt voneinander gelegener Hauptverteiler führen würde, sind also bisher die einzelnen Hauptverteiler in einer ersten Ebene und mit Spiel zueinander ohne feste Verbindung untereinander angeordnet worden, und in einer Ebene darüber bzw. darunter wurde ein Vorverteiler angeordnet, und dieser Vorverteiler war seinerseits mit einem in einer weiteren Ebene darüber oder darunter angeordneten Anguß verbunden. Die thermische Ausdehnung der Formen und der Vorverteiler führt dann nur zu verhältnismäßig geringen wechselseitigen Beeinflussungen, weil die entsprechenden, in verschiedenen Ebenen angeordneten Teile in Richtung senkrecht zu den Ebenen, in denen sie angeordnet sind, nur relativ kleine Abmessungen haben, so daß die absoluten Dickenänderungen auch bei größeren thermischen Belastungen noch innerhalb eines beherrschbaren Rahmens bleiben. Üblicherweise werden im Stand der Technik Vorverteiler und die darunterliegenden Formteile über Bolzen miteinander verbunden, die in Langlöchem verlaufen, wobei Vorverteiler und Formen im kalten Zustand mit geringem Spiel durch die Bolzen zusammengehalten werden und sich die Formteile und die Vorverteiler in Richtung senkrecht zu der Bolzenerstreckung bei einer entsprechenden Erwärmung noch verschieben können, da die Bolzen, wie bereits erwähnt, in entsprechenden Langlöchern aufgenommen sind, die eine solche Verschiebung quer zu den Bolzen zulassen. Das Spiel zwischen den miteinander in Eingriff tretenden Flächen der Vorverteiler und der entsprechenden Hauptverteiler kann dabei so gering gehalten werden, daß auch in einem noch nicht vollständig heißen Zustand der Form das relativ hoch viskose Spritzgußmaterial nicht in entsprechende Dichtungsspalte eindringen kann.

Diese Übereinanderanordnung von Hauptverteilern und Vorverteilern führt allerdings dazu, daß die Form insgesamt relativ voluminös und schwer wird, zumal die Form auch insgesamt in einer entsprechenden Maschine fixiert werden und mit entsprechenden Anschlüssen versehen werden muß, wobei entsprechende Halterungen bzw. Aufnahmen und Anschlüsse für die Form deren Gestalt angepaßt sein müssen. Aufgrund der relativ großen Masse der Hauptverteiler und der Vorverteiler einschließlich aller zugehörigen Komponenten ist auch eine entsprechende Heizleistung erforderlich, um das gesamte System auf eine gewünschte Temperatur zu bringen bzw. auf dieser Temperatur zu halten. Die entsprechenden Spritzgußmaschinen werden daher insgesamt relativ groß und schwer, benötigen entsprechende Maschinenfundamente und insbesondere dann, wenn solche Hauptverteiler und Vorverteiler auch noch beweglich sein sollen, entsprechend große und schwere Maschinenantriebe.

Gegenüber diesem Stand der Technik liegt der vorliegenden Erfindung die Aufgabe zugrunde, eine Spritzgußform mit den eingangs genannten Merkmalen zu schaffen, welche zumindest einen Teil der vorgenannten Nachteile vermeidet, insbesondere also leichter und weniger voluminös ist.

Gemäß dem kennzeichen des anliegenden Anspruchs 1 wird diese Aufgabe dadurch gelöst, daß mindestens ein Teil der Vorverteiler zwischen benachbarten Hauptverteilem angeordnet ist, wobei die Heißkanäle der Vorverteiler und der Hauptverteiler in den einander zugewandten seitlichen Flächen münden und wobei Hauptverteiler und Vorverteiler durch seitliche Federelemente fest und dicht aneinandergedrückt werden, wobei die Federelemente eine begrenzte Bewegung der Hauptverteiler unter Überwindung der Federkraft erlauben.

Bevorzugte Ausführungsformen der Erfindung sind in den Unteransprüchen offenbart.

Im Gegensatz zum Stand der Technik, bei welchem die Vorverteiler über bzw. unter den Hauptverteilern angeordnet wurden, wird also erfindungsgemäß ein Vorverteiler in derselben Ebene wie die Hauptverteiler und zwischen diesen angeordnet. Dadurch sind zwar nunmehr die einzelnen Hauptverteiler über den Vorverteiler mehr oder weniger starr miteinander gekoppelt, zumindest in einer Richtung, jedoch werden diese Teile lediglich durch Federelemente zusammengedrückt, so daß die Teile zumindest so weit beweglich bleiben, daß sie in ihrer thermischen Ausdehnung nicht behindert werden.

Indem Federelemente jeweils zum Beispiel auf den Außenseiten zweier Hauptverteiler angreifen, zwischen. denen sich ein entsprechender Vorverteiler befindet, so daß beide Hauptverteiler gegen diesen Vorverteiler gedrückt werden, kann die thermische Ausdehnung nach beiden Seiten gleichmäßig erfolgen, wobei vorausgesetzt ist, daß die an den gegenüberliegenden Hauptverteilem angeordneten Federelemente jeweils gleichartig sind und in gleicher Zahl vorhanden und nach Möglichkeit auch symmetrisch angeordnet sind. Bei Haupverteilern, die unterschiedliche Maße in zwei zueinander senkrechten Richtungen (innerhalb der Ebene der Hauptverteiler) haben, ordnet man diese und den dazwischenliegenden Vorverteiler zweckmäßigerweise so an, daß sich zwischen den gegeneinander wirkenden Federelementen auf den gegenüberliegenden Seiten der Hauptverteiler ein möglichst kurzer Abstand ergibt. Wenn beispielsweise die Hauptverteiler eine länglich rechteckige Form haben, so werden sie zweckmäßigerweise mit ihren Längsseiten nebeneinander und parallel zueinander ausgerichtet, und ein entsprechender Vorverteiler, der im wesentlichen ebenfalls eine längliche Form hat, wird in Längsrichtung zwischen den beiden Hauptverteilern ausgerichtet und so positioniert, daß Übergangsöffnungen der Vorverteiler und der Hauptverteiler (also in den Längsseiten der Hauptverteiler) im wesentlichen miteinander fluchten bzw. nach einer entsprechenden thermischen Ausdehnung der Hauptverteiler und Vorverteiler auf jeden Fall miteinander fluchten. Auf diese Weise sind die beiden Hauptverteiler mit dem dazwischenliegenden Vorverteiler in der Weise angeordnet, daß sich der kürzestmögliche Abstand zwischen gegenüberliegenden Federelementen ergibt, so daß damit die thermische Ausdehnung in dieser Richtung und damit auch der Federweg für ein entsprechendes System minimal ist.

Noch kürzer wird der Abstand zwischen den Federelementen bei einer anderen bevorzugten Ausführungsform der Erfindung, bei welcher die Hauptverteiler an gegenüberliegenden Enden und im wesentlichen in Flucht mit ihren einander gegenüberliegenden Seiten Verlängerungen bzw. Flansche aufweisen, wobei zwischen den einander gegenüberliegenden Seiten der Vorverteiler angeordnet ist und die beiden so einander zugewandten Hauptverteiler durch an den seitlichen Flanschen angreifende Spannschrauben zusammengehalten werden. Dabei können die Flansche so ausgestaltet werden, daß sie aufgrund einer gewissen Verformung oder Verbiegung einen, wenn auch sehr kleinen, Federweg bereitstellen, der aber womöglich aufgrund des geringen Abstandes der Flansche ausreichend ist, um die thermische Ausdehnung des Vorverteilers zwischen den einander zugewandten Hauptverteilem auszugleichen. Da der Vorverteiler in dieser Richtung ein Maß von nur wenigen Zentimetern hat, ist auch seine absolute thermische Ausdehnung in dieser Richtung vergleichsweise gering. Falls jedoch eine Verformung oder Verbiegung der Flansche nicht ausreichend ist, um etwaige Relativbewegungen senkrecht zu den einander zugewandten Flächen der beiden gegenüberliegenden Hauptverteiler auszugleichen, können in Form von Unterlegscheiben oder Tellerfedern Federelemente vorgesehen werden, die auf die an den Flanschen angreifenden Spannschrauben aufgeschoben bzw. zwischen Mutter oder Kopf der Schraube und Flansch eingeschoben werden.

Bei einem länglichen Vorverteiler können auch mehrere Hauptverteiler auf derselben Seite eines Vorverteilers hintereinander angeordnet werden und jeweils die gleiche Anzahl von Hauptverteilern auf der gegenüberliegenden Seite eines länglichen Vorverteilers.

Zweckmäßigerweise sind die Hauptverteiler und Vorverteiler innerhalb eines stabilen, umgebenden Rahmens angeordnet, der als Gegenhalter für die Federelemente dient. Selbstverständlich sind auch andere Varianten von Gegenhaltern möglich, z. B. in Form von Klammern, Ringen oder dergleichen. Auch bei herkömmlichen Heißkanal-Verteilersystemen sind ohnehin Grundplatten oder dergleichen vorgesehen, auf denen bzw. in deren Aussparungen die Vorverteiler und Hauptverteiler aufgenommen sind. Es versteht sich, daß zumindest bei einigen Ausführungsformen der Erfindung diese Grundplatte oder Halterungsplatte so ausgestaltet sein sollte, daß sich Federelemente mit einem Ende an dieser Platte abstützen können. Der vorstehend angesprochene Rahmen kann also beispielsweise von einem Rand oder Vorsprüngen der Halteplatte gebildet werden.

Weiterhin ist in der bevorzugten Ausführungsform der Erfindung vorgesehen, daß Hauptverteiler, die im wesentlichen rechteckig sind und eine längere und eine kürzere Seite aufweisen, an einer ihrer Längsseiten eine bezüglich dieser Seite zentriert angeordnete Durchtrittsöffnung aufweisen.

Weiterhin sollte der Vorverteiler in Längsrichtung gleitbar an den Seitenflächen der Hauptverteiler anliegen, wobei die aneinanderliegenden Flächen der Vorverteiler und der Hauptverteiler selbstverständlich als plane, ebene Flächen ausgebildet sind, die einen dichten Eingriff gewährleisten, ohne daß irgendwelche Dichtungen oder dergleichen zwischen diesen Flächen angeordnet werden müssen. Ein dichter Eingriff zwischen den Flächen der Vorverteiler und der Hauptverteiler wird durch die Federn sichergestellt, die von beiden Seiten her einen Hauptverteiler gegen den dazwischenliegenden Vorverteiler andrücken. Es werden also keinerlei Befestigungsbolzen oder dergleichen benötigt, die die Hauptverteiler und den Vorverteiler zusammenhalten müssen, und insbesondere braucht man auch keinerlei Spiel senkrecht zu den aneinanderliegenden Flächen von Vorverteiler und Hauptverteilem vorzusehen, weil jegliche thermische Ausdehnung in dieser Richtung durch die Federelemente aufgefangen wird. Es versteht sich, daß auch die Bauhöhe eines solchen Systems wesentlich geringer ist als bei den herkömmlichen Formen einer entsprechenden Größe, da der Vorverteiler bzw. mehrere Vorverteiler in derselben Ebene wie die Hauptverteiler angeordnet sind, so daß die darüber oder darunter liegenden Ebenen für Vorverteiler nicht benötigt werden. Auch an die Stabilität der Vorverteiler, die lediglich zwischen zwei (oder auch mehr) gegenüberliegenden Hauptverteilem eingeklemmt wird, sind nur geringere Anforderungen zu stellen.

Die Gleitbarkeit in Längsrichtung ermöglicht übrigens, daß sich der Vorverteiler, insbesondere bei Ausführungsformen, in welchen an der Längsseite eines Vorverteilers zwei oder auch mehr Hauptverteiler hintereinander angeordnet sind, auf den Dichtflächen einzelner Hauptverteiler mehr oder weniger verschieben kann, da sie aufgrund ihrer größeren Gesamtlänge in dieser Richtung eine absolut stärkere thermische Ausdehnung erfährt als die einzelnen, hintereinander angeordneten Hauptverteiler, die nicht starr miteinander verbunden sind. Der Vorverteiter kann z. B. an einem zentralen Punkt an einem Rahmen bzw. einer Grundplatte fixiert sein, während die Hauptverteiler im wesentlichen nur durch die Federn gehalten werden, ihrerseits aber auch zumindest in Längsrichtung des Vorverteilers durch einen Anschlag oder dergleichen fixiert sein können.

Zweckmäßigerweise sind die einzelnen Hauptverteiler so aufgebaut, daß ihre seitlichen Durchtrittsöffnungen über einen Kanal mit dem Zentrum des jeweiligen Hauptverteilers verbunden sind, von wo aus weitere Kanäle derart zu den Spritzdüsen bzw. -öffnungen führen, so daß der Fließweg vom Zentrum des Hauptverteifers zu allen Einspritzdüsen bzw. -öffnungen im wesentlichen gleich lang ist. Wenn überdies auch noch alle Hauptverteiler bezüglich des Vorverteilers symmetrisch angeordnet sind, ist damit sichergestellt, daß vom Anguß bis zu den einzelnen Spritzdüsen sämtliche Fließwege zu den verschiedenen Spritzdüsen hin jeweils exakt die gleiche Länge haben. Dies kann man mindestens für vier Hauptverteiler sicherstellen, von denen auf jeder Seite eines länglichen Vorverteilers jeweils zwei angeordnet sind, die in ihren Längsseiten mittig angeordnet Durchtrittsöffnungen haben, die mit entsprechenden Durchtrittsöffnungen des Vorverteilers fluchten, wobei diese Durchtrittsöffnungen des Vorverteilers wiederum symmetrisch zu einem zentralen Anguß angeordnet sind, über den der Vorverteiler mit dem Spritzgußmaterial versorgt wird.

Die vorliegende Erfindung ist insbesondere für Formen ausgelegt, die Rohlinge bzw. Vorformen von sogenannten PET-Flaschen herstellt.

Bei einer solchen Spritzgußform für die Rohlinge von PET-Flaschen ist es besonders bevorzugt, wenn die Form aus mindestens zwei voneinander getrennten Hauptverteilern besteht, die mit einem gemeinsamen Vorverteiler verbunden sind, und die jeweils mindestens zwei, vorzugsweise vierundzwanzig oder zweiunddreißig Einspritzöffnungen/Düsen pro Hauptverteiler aufweisen. Die Gesamtzahl der Rohlinge bzw. PET-Vorformen, die in einem einzigen Spritzgießvorgang mit einer solchen Maschine hergestellt werden können, beträgt somit sechsundneunzig, wobei aber bei der erfindungsgemäßen Ausgestaltung der Maschine ohne weiteres auch noch größere Hauptverteiler herstellbar sind oder aber auch die Zahl der symmetrisch mit seitlichen Dichtflächen anzuschließenden Hauptverteiler noch vergrößert werden kann, wenn z. B. der Vorverteiler eine H-Form erhält,

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine schematische Darstellung einer Spritzgußform für mehrere Teile nach dem Stand der Technik,
- Figur 2: ein entsprechendes Schema einer erfindungsgemäßen Spritzgußform,
- Figur 3: eine Übersicht über eine nach dem Schema gemäß Figur 2 aufgebaute Spritzgußform mit im wesentlichen realistischen Proportionen und Kanalanordnungen,
- Figur 4: einen Teilausschnitt aus Figur 3, der den Hauptverteiler 11 zeigt,
- Figur 5: ein in dem Kreis V in Figur 3 erkennbares und vergrößertes Detail,
- Figur 6: ein in dem Kreis VI in Figur 3 gezeigtes und entsprechend vergrößertes Detail und
- Figur 7: eine schematisch dargestellte, alternative Ausführungsform, deren Hauptverteiler durch Spannbolzen zusammengehalten werden, die an Flanschen der Hauptverteiler angreifen.

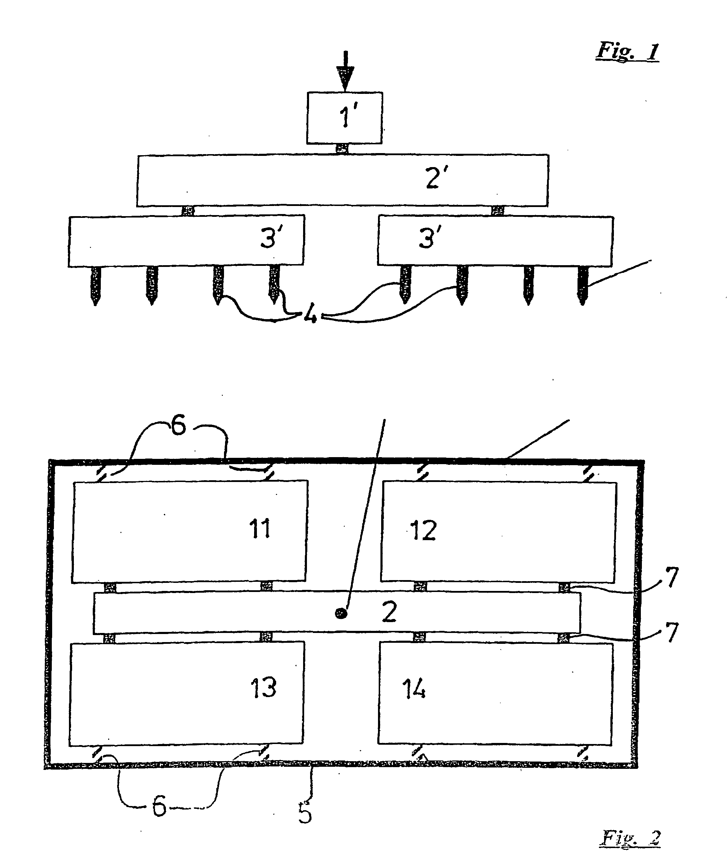

In Figur 1 erkennt man zwei Hauptverteiler, die mit 3' bezeichnet sind und die jeweils mehrere Einspritzdüsen 4' aufweisen, wobei die tatsächliche Zahl der Einspritzdüsen 4' sowohl kleiner als auch wesentlich größer sein kann als hier dargestellt und wobei auch senkrecht zur Papierebene außer den beiden Hauptverteilern 3' noch mindestens zwei weitere, entsprechende Hauptverteiler angeordnet sein können.

Beide Hauptverteiler 3' weisen an ihrer Oberseite etwa im Zentrum des Hauptverteilers 3', der von der Oberseite aus rechteckig erscheint, eine Durchtrittsöffnung auf, und ein über den Hauptverteilem 3' angeordneter Vorverteiler 2' ist so ausgerichtet, daß seine auf der Unterseite des Vorverteilers 2' angeordneten Durchtrittsöffnungen mit den entsprechenden Durchtrittsöffnungen der Hauptverteiler 3' fluchten. Dabei können allerdings die Durchtrittsöffnungen des Vorverteilers und der Hauptverteiler im kalten Zustand gegeneinander verschoben sein, wobei sich nur aufgrund der unterschiedlichen thermischen Ausdehnung des längeren Vorverteilers 2' im Vergleich zu den kürzeren Hauptverteilern 3' eine exakt ausgerichtete Position der Durchtrittsöffnungen ergibt.

Zu diesem Zweck sind der Vorverteiler 2' und die Hauptverteiler 3' jeweils über Bolzen miteinander verbunden, die durch Langlöcher in dem Vorverteiler 2' hindurchgeführt sind und die den Vorverteiler 2' und die Hauptverteiler 3' zumindest im kalten Zustand mit einem gewissen Spiel zusammenhalten, welches eine Relatiwerschiebung der miteinander in Berührung stehenden Oberflächen des Vorverteilers 2' und der Hauptverteiler 3' erlauben. Der Vorverteiler 2' ist seinerseits in seinem Zentrum mit einem Anguß 1' verbunden, d.h. einem Vorrat oder Anschluß für im allgemeinen schmelzflüssiges Spritzgußmaterial.

Wie man sieht, sind die Hauptverteiler 3', der Vorverteiter 2' und auch der Anguß 1' in verschiedenen Ebenen übereinander angeordnet und haben daher eine relativ große Bauhöhe.

Im Gegensatz hierzu sind bei dem Aufbau gemäß der vorliegenden Erfindung, wie er schematisch in Figur 2, diesmal in einer Draufsicht von oben, dargestellt ist, die einzelnen Hauptverteiler 11, 12, 13 und 14 in derselben Ebene angeordnet wie der Vorverteiler 2. Die einzelnen Hauptverteiler haben eine im wesentlichen länglich rechteckige Form und liegen mit ihren Längsseiten an den Längsseiten eines schmalen, länglichen Vorverteilers 2 an. Sowohl die Hauptverteiler als auch der Vorverteiler weisen sogenannte "Heißkanäle" auf, die im wesentlichen zylindrischen Querschnitt haben und durch die flüssige Spritzgußmasse fließt. In einem Angußbereich 1 fließt die Spritzgußmasse in den Vorverteiter 2 hinein und von dort durch den hier nicht erkennbaren, in Längsrichtung des Vorverteilers 2 verlaufenden Heißkanal hindurch und über Übergangsöffnungen in die einzelnen Hauptverteiler 11, 12, 13 und 14 hinein. Im vorliegenden Fall sind zwischen den einzelnen Hauptverteilern und des Vorverteilers 2 zwar jeweils zwei Übergangsbereiche bzw. Durchtrittskanäle 7 dargestellt, jedoch ist dies nur eine schematische Darstellung, und in der Praxis wird statt dessen nur ein einziger Übergangskanal verwendet, der zentral in der Längsseite jedes der Hauptverteiler vorgesehen ist, mit einem entsprechenden Kanal und einer Durchtrittsöffnung in entsprechender Position an dem Vorverteiler 2. Jeweils zwei auf gegenüberliegenden Seiten des Vorverteilers 2 angeordnete Paare von Hauptverteilern 11, 13 bzw. 12, 14 werden durch Federelemente 6 von beiden Seiten her fest gegen den Vorverteiler 2 angedrückt, wobei sich die Federn ihrerseits in einem stabilen Rahmen oder einer Grundplatte 10 abstützen, die entsprechende Aussparungen zur Aufnahme der Hauptverteiler und des Vorverteilers aufweist.

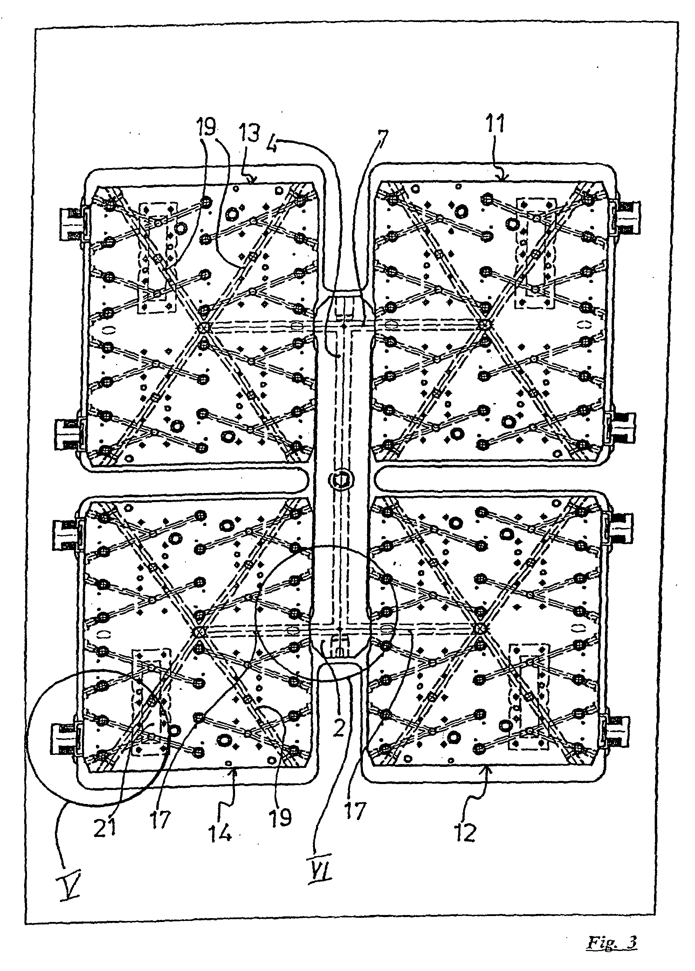

Weitere Einzelheiten der bevorzugten Ausführungsformen ergeben sich aus der folgenden Beschreibung der Figuren 3 bis 6, die etwas realistischere Darstellungen der erfindungsgemäßen Spritzgußform wiedergeben.

Wie man anhand der Figur 3 erkennt, haben die einzelnen Hauptverteiler 11, 12, 13 und 14 auch hier eine im wesentlichen rechteckige Form, allerdings nicht so ausgeprägt länglich wie dies in dem Schema gemäß Figur 2 dargestellt ist. Jeweils zwei Hauptverteiler 11, 12 bzw. 13, 14 sind auf derselben Seite eines Vorverteilers 2 in Längsrichtung hintereinander angeordnet, wobei der Vorverteiler so bemessen ist, daß seine an den jeweiligen Enden des Vorverteilers 2 angeordneten Durchtrittskanäle 7 im wesentlichen mit einem Durchtrittskanal 17 der einzelnen Hauptverteiler fluchten, der wiederum in der Mitte der Längsseite jedes der Hauptverteiler mündet. Der Vorverteiler weist einen zentralen, in ihrer Längsrichtung verlaufenden Heißkanal 4 auf, der an seinen entgegengesetzten Enden mit dem bereits erwähnten Querkanal 7 verbunden ist, der seinerseits mit den bereits erwähnten Durchtrittskanälen der Hauptverteiler fluchtet. Im Zentrum des Vorverteilers 2 ist ein Anguß zu erkennen, in den das gießfähige Spritzgußmaterial einfließt. Jeweils auf gegenüberliegenden Seiten des Vorverteiters 2 angeordnete Hauptverteiler 11, 13 bzw. 12, 14 liegen mit ihrer dem Vorverteiler abgewandten Seite an Federelementen 6 an, die sich in Aussparungen in einem Rahmen 10 abstützen.

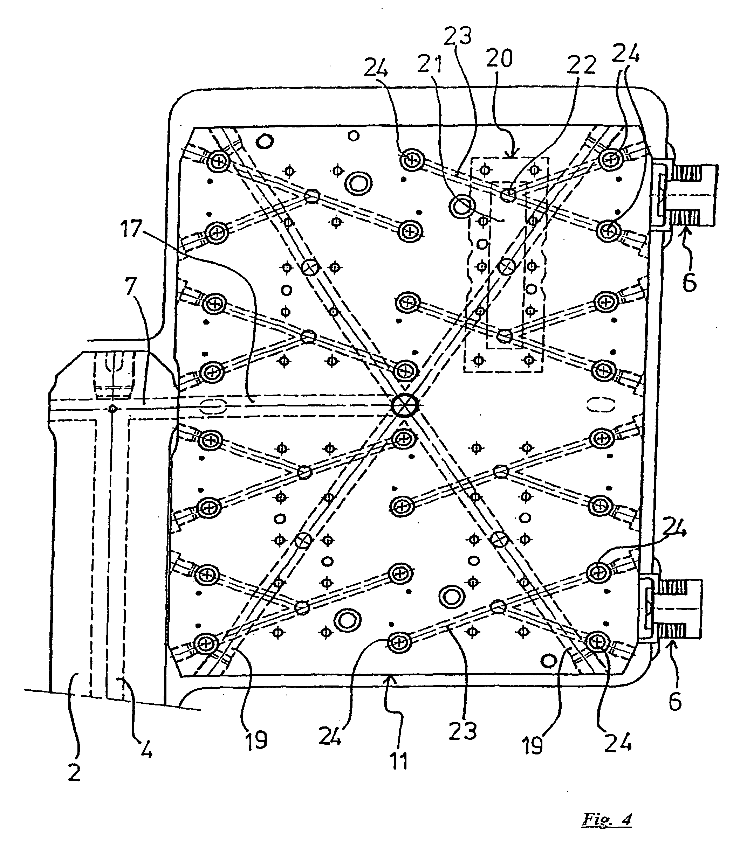

Figur 4 zeigt beispielhaft den Hauptverteiler 11 aus Figur 3. Man erkennt wiederum einen Teil des Vorverteilers 2 mit dem zentralen Heißkanal 4 und dem querverlaufenden Heißkanal bzw. Durchtrittskanal 7, der mit dem entsprechenden Kanal 17 in dem Hauptverteiler 11 fluchtet. Dieser Heißkanal 17 führt bis zum Zentrum des Hauptverteilers 11, der im wesentlichen die Form einer dicken, rechteckigen Platte hat. Diese Platte weist zwei Diagonalbohrungen 19 auf, die sich im Zentrum des Hauptverteilers 11 kreuzen und dort mit dem Durchtrittskanal 17 verbunden sind. Im oberen rechten Teil der Figur 4 ist nochmals ein aufgeschraubter externer Vorverteiler 20 dargestellt, der einen Heißkanal 21 hat, der im wesentlichen in Längsrichtung, d.h. parallel zu dem Heißkanal 4 des Vorverteilers 2, verläuft und der mit einem der diagonalen Kanäle 19 verbunden ist. Von dort führt der interne Heißkanal 21 zu Anschlüssen 22 und über Kanäle 23 zu den Einspritzdüsen bzw.-öffnungen 24, die von dem Übergabepunkt 22 aus allesamt dieselbe Länge haben. Auch die zweifach an jedem Vorverteiler 20 vorgesehenen Übergabeöffnungen 22 haben jeweils den gleichen Abstand von dem zentralen Anschluß dieses Vorverteilers 20 an den Diagonalkanal 19, und von dort wiederum sind die Fließwege über die Kanäle 19, 17, 7 und 4 für alle Materialströme gleich lang.

Am rechten Bildrand der Figur 4 und auf der dem Vorverteiler 2 gegenüberliegenden Seite des Hauptverteilers 11 erkennt man zwei Federpakete 6 in Form von aufeinandergestapelten Tellerfedem, die auf einem Stopfen gehaltert werden, der sich in einer Aussparung eines Halterahmens bzw. einer Halteplatte abstützt.

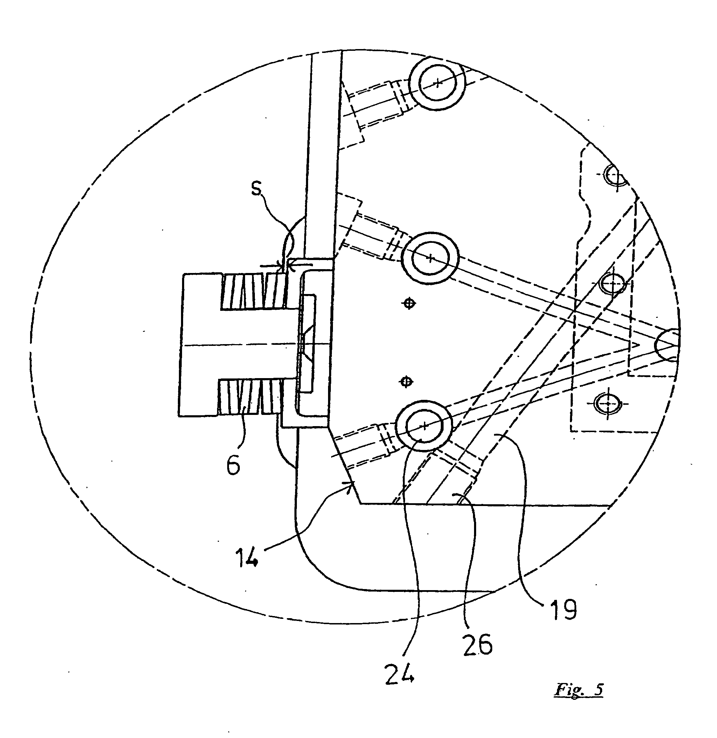

In Figur 5 erkennt man einen vergrößerten Ausschnitt des erfindungsgemäßen Hauptverteilers, und zwar von demjenigen Bereich, der in Figur 3 durch einen Kreis V markiert ist. Hier sind nochmals Details des Federpaketes 6 erkennbar sowie des Bewegungsspielraumes s, der für den Hauptverteiler 14 aufgrund seiner thermischen Ausdehnung zur Verfügung steht. Wie man sieht, ist das erforderliche Spiel s vergleichsweise gering, aber dennoch signifikant, so daß sich die daraus resultierenden Bewegungen nur durch ein Federelement ausgleichen lassen. Es versteht sich aber, daß es sich dabei nicht notwendigerweise um ein Paket aus Tellerfedern 6 handeln muß, sondern daß ebensogut auch Schraubenfedern, hydraulische Federelemente oder Druckluftfedern oder sonstige Gasfedern verwendet werden könnten. Die erfindungsgemäße Konstruktion mit einer Packung aus TellerFedern ist jedoch besonders platzsparend und einfach.

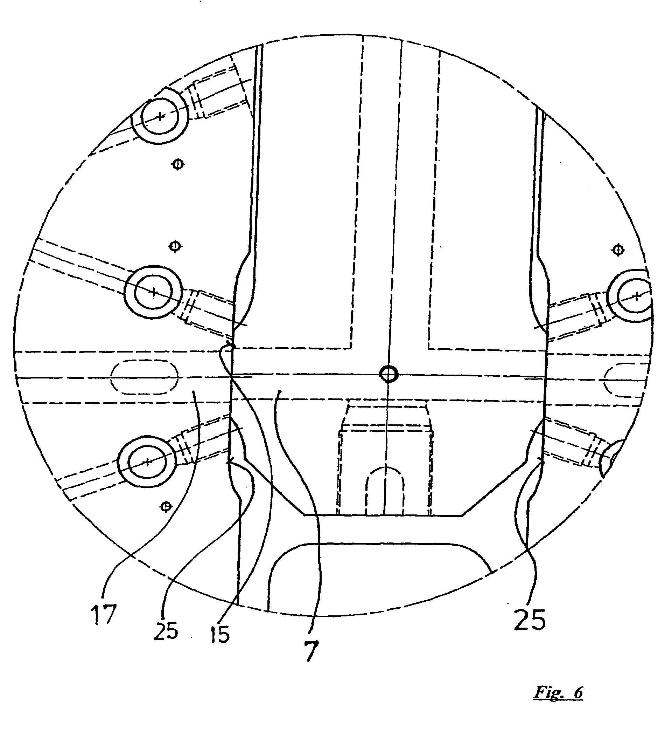

Figur 6 zeigt die den Federpaketen gegenüberliegende Seite eines Hauptverteilers im Bereich der Übergangskanäle 7, 17.

Die Kanäle 7, 17 münden in ebenen Dichtflächen 15 bzw. 25, wobei die ebene Fläche 15 an einem seitlich etwas hervorstehenden Teil am Ende des Vorverteilers vorgesehen ist und die ebene Fläche 25 an einem leicht zurückspringenden Teil des Hauptverteilers 14 vorgesehen ist, wobei hier nicht notwendigerweise ein rückspringender Bereich vorgesehen werden muß. Wesentlich ist lediglich, daß der Vorverteiler 2 und die Hauptverteiler nicht über ihre ganze Längsseite hinweg oder aber über einen Großteil dieser Längsseiten aneinander anliegen und reiben, sondern daß dieser Reibungseingriff, der gleichzeitig auch ein dichtender Eingriff der entsprechend eben ausgebildeten Flächen 15, 25 ist, in genau definierten, beschränkten Bereichen stattfindet.

Wie man in Figur 6 erkennt, sind die Durchtrittskanäle 7 bzw. 17 des Vorverteilers 2 bzw. des Hauptverteilers 14 nicht exakt fluchtend miteinander ausgerichtet. Figur 6 stellt daher den kalten Zustand des Systems dar. Wenn nämlich aufgrund der heißen Spritzgußmasse und gegebenenfalls auch aufgrund zusätzlicher Heizung der Vorverteiler und die Hauptverteiler 11 bis 14 auf ihre normale Betriebstemperatur erwärmt sind, so dehnt sich der Vorverteiler 2, auch wenn er aus demselben Material hergestellt ist wie die auptverteiler 11 bis 14, absolut stärker aus als die Hauptverteiler, da er insgesamt länger ist als die Hauptverteiler und in der Mitte fixiert ist, während die Hauptverteiler wahlweise an dem einen oder anderen Ende oder auch in der Mitte gegen eine weitere Längsverschiebung gesichert sein können, und sich damit im Bereich der Durchtrittsöffnungen nur wenig, gar nicht oder gar in Gegenrichtung zur der thermischen Verschiebung des Übergangsbereiches des Vorverteilers 2 verschieben. Sobald alle Teile ihre normale Betriebstemperatur erreicht haben, ist der in Figur 6 noch erkennbare Fluchtungsfehler ausgeglichen.

Es versteht sich, daß die Flächen 15 und 25 auch in Längsrichtung des Vorverteilers 2 so bemessen sind, daß sie entsprechende Relativbewegungen aufgrund unterschiedlicher thermischer Ausdehnungen ohne weiteres zulassen.

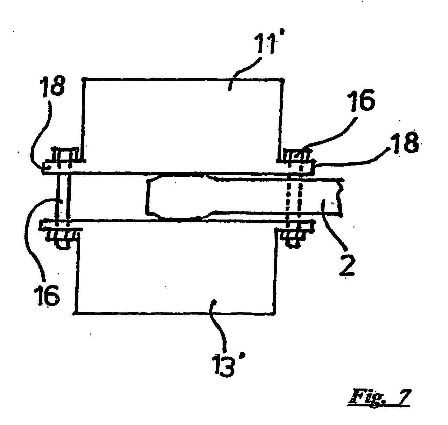

In Figur 7 erkennt man eine weitere, alternative Ausführungsform der Erfindung, bei welcher nicht an den Außenseiten der Hauptverteiler Federpakete 6 vorgesehen sind, sondern bei welcher statt dessen Spannschrauben 16 vorgesehen sind, welche die Hauptverteiler 11' und 13' durch Eingriff an Flanschen 18 zusammenhalten. Die Flansche 18 stellen praktisch Verlängerungen der einen Längsseite der Hauptverteiler 11' bzw. 13' dar, und zwar derjenigen Seiten, die auch die Durchtrittsöffnung 17 für die Verbindung mit dem Vorverteiler 2 aufweist. Die Flansche 18 haben jeweils eine Bohrung, die auch in Form eines Langlochs vorgesehen werden kann, wobei eine Schraube 16 die miteinander fluchtenden Bohrungen der Flansche gegenüberliegender Hauptverteiler 11' und 13' durchgreift und mit Hilfe einer auf das Schraubenende aufgeschraubten Mutter festgezogen wird, und zwar auf beiden Seiten gleichmäßig, so daß die Flächen 25, 15 der Hauptverteiler 11, 13 bzw. des Vorverteilers 2 eben und dicht aufeinander liegen. Wenn heißes Spritzgußmaterial durch den Vorverteiler 2 in die Hauptverteiler 11' bzw. 13' einfließt, dehnt sich zwar der Vorverteiler 2 im wesentlichen in allen Richtungen gleichmäßig aus, da er jedoch in Richtung senkrecht zu den einander zugewandten Seiten 25 der Hauptverteiler 11', 13' nur relativ geringe Abmessungen hat, werden diese beiden Flächen 25 auch nur geringfügig auseinandergedrückt, wobei die Flansche 18 hinreichend elastisch gestaltet werden können, um diese geringfügige thermische Bewegung aufzufangen, so daß keine zusätzlichen Federelemente benötigt werden. Wahlweise könnten. aber auch TellerFedern oder andere Federelemente auf die Schrauben 16 aufgeschoben und zwischen Schraubenkopf bzw. Mutter und dem zugehörigen Flansch 18 angeordnet werden.

Auf der rechten Seiten in Figur 7 kann die Schraube 16 entweder außerhalb des Vorverteiters 2 verlaufen, oder aber durch eine Bohrung in dem Vorverteiler 2, die selbstverständlich so angeordnet ist, daß sie die Längsbohrung 4 in dem Vorverteiler 2 nicht trifft und damit den Materialfluß in dem Vorverteiler 2 nicht stört. Gegebenenfalls könnte der Vorverteiler 2 auch als ein leicht aus der Papierebene abgewickeltes Teil hergestellt werden, damit die Schraube 16 zwar einerseits bezüglich der Berührungsftächen zwischen Vorverteiler und Hauptverteiler symmetrisch zu der gegenüberliegenden Schraube 16 angeordnet werden kann, andererseits jedoch auch der Strömungskanal 4 in dem Vorverteiler 2 im wesentlichen zentral durch diesen verlaufen kann.

Wie man im übrigen erkennen kann, sind sämtlich Heißkanäle in Form von Durchgangsbohrungen hergestellt, deren Enden durch abgedichtet eingeschraubte Stopfen 26 verschlossen werden, soweit sie nicht an entsprechenden Durchtrittsöffnungen münden.

Nicht dargestellt sind Leitungen und Bahnen für etwaige Zusatzheizungen und Kühlkanäle. Die Kühlkanäle werden im allgemeinen von einem Kühlmittel, wie z. B. Wasser, durchströmt, um ein übermäßiges Aufheizen und vor allem auch ein ungleichmäßiges Aufheizen unterschiedlicher Formbereiche zu vermeiden. Sie sind aber für die vorliegende Erfindung nicht von nennenswerter Bedeutung und sind daher nicht dargestellt.

## Patentansprüche

1. Heißkanal-Verteilersystem für eine Spritzgußform zum gleichzeitigen Spritzgießen mehrerer oder großer Teile, mit einer Mehrzahl von Spritzdüsen bzw. -öffnungen (24), die dafür ausgelegt sind, im wesentlichen gleichzeitig Spritzgußmasse unter hohem Druck und bei hoher Temperaturen in vorgegebene Formbereiche abzugeben, wobei die Formbereiche mindestens teilweise an voneinander getrennten Hauptverteilern (11, 12,1 3, 14) vorgesehen sind, die Heißkanäle (17, 19, 21, 23) aufweisen und über Vorverteiler (2), welche ihrerseits Heißkanäle (4, 7) aufweisen, mit einem Anguß (1) für die Spritzgußmasse verbunden sind, dadurch gekenneichnet daß mindestens ein Teil der Vorverteiler (2) zwischen benachbarten Hauptverteilern (11 ,12, 13, 14) angeordnet ist, wobei die Heißkanäle (7,17) der Vorverteiler (2) und der Hauptverteiler (11, 12, 13, 14) in den einander zugewandten und einander berührenden seitli-chen Flächen (15, 25) münden und wobei Hauptverteiler (11, 12, 13, 14) und Vorverteiler (2) durch seitliche Federelemente (6) fest und dicht aneinandergedrückt werden, wobei die Federelemente (6) eine begrenzte Bewegung der Hauptverteiler (11, 12, 13, 14) unter Überwindung der Federkraft erlauben.

2. Heißkanal-verteilersystem nach Anspruch 1, **dadurch gekennzeichnet, daß** mindestens zwei und vorzugsweise mindestens vier getrennte Hauptverteiler vorgesehen sind, von denen je zwei auf den beiden gegenüberliegenden Längsseiten eines länglichen Vorverteilers (2) angeordnet sind.

3. Heißkanal-Verteilersystem nach Anspruch 1 oder 2, **dadurch gekennzeichnet, daß** Hauptverteiler (11, 12, 13, 14) und Vorverteiler (2) innerhalb eines stabilen, umgebenden Rahmens (10) angeordnet sind, der als Gegenhalter für die Federelemente (B) dient.

4. Heißkanal-Verteilersystem nach einem der Ansprüche 1 bis 3, **dadurch gekennzeichnet, daß** jeder Hauptverteiler an einer seiner Seiten eine bezüglich dieser Seite zentriert angeordnete Durchtrittsöffnung aufweist.

5. Heißkanal-Verteilersystem nach einem der Ansprüche 1 bis 4, **dadurch gekennzeichnet, daß** der Vorverteiler (2) in Längsrichtung gleitbar an den Seitenflächen (25) der Hauptverteiler (11, 12, 13, 14) anliegt.

6. Heißkanal-Verteilersystem nach einem der Ansprüche 1 bis 5, **dadurch gekennzeichnet, daß** die seitlichen Durchtrittsöffungen ober einen Kanal (17) zum Zentrum des jeweilligen Hauptverteilers (11, 12, 13, 14) führen, von wo aus weitere Kanäle (19, 21, 23) derart zu den Spritzdüsen bzw. -öffnungen führen, daß der Fließweg vom Zentrum des Hauptverteilers (11,12,13. 14) zu allen Einspritzdüsen bzw. -Öffnungen im wesentlichen gleich lang ist

7. Heißkanal-Verteilersystem nach einem der Ansprüche 1 bis 6, **dadurch gekennzeichnet, daß** sie als Form für Rohlinge von PET-Flaschen ausgebildet ist.

8. Heißkanal-Verteilersystem nach einem der Ansprüche 1 bis 7, **dadurch gekennzeichnet, daß** sie aus mindestens zwei getrennten Hauptverteilern (11, 12, 13, 14) mit einem gemeinsamen Vorverteiler (2) und mit mindestens je zwei und vorzugsweise vierundzwanzig oder zweiunddreißig Einspritzöffnungen/-düsen pro Hauptverteiler (11, 12, 13, 14) ausgebildet ist.

9. Heißkanal-Verteilersystem nach einem der Ansprüche 1 bis 7, **dadurch gekennzeichnet, daß** mindestens zwei Hauptverteiler vorgesehen sind, die an gegenüberliegenden Enden und im wesentlichen in Flucht mit ihren einander gegenüberliegenden Seiten Verlängerungen bzw. Flansche (18) aufweisen, wobei zwischen den einander gegenüberliegenden Seiten der Vorverteiler (2) angeordnet ist und die beiden so einander zugewandten Hauptverteiler durch an den seitlichen Flanschen angreifende Spannschrauben (16) zusammengehalten werden.

## Claims

1. A hot runner manifold system for an injection mould for simultaneous injection moulding of several parts or of large parts, with a multiplicity of injection nozzles or orifices (24), which are designed for delivering injection moulding compound substantially simultaneously under high pressure and at high temperatures into specified mould zones, the mould zones being provided at least partially on main manifolds (11, 12, 13, 14) that are separated from one another, which have hot runners (17, 19, 21, 23) and are connected via pre-manifolds (2), which in their turn have hot runners (4, 7), to a sprue (1) for the injection moulding compound, **characterized in that** at least one part of the pre-manifolds (2) is arranged between adjacent main manifolds (11, 12, 13, 14), with the hot runners (7, 17) of the pre-manifolds (2) and of the main manifolds (11, 12, 13, 14) opening into the lateral surfaces (15, 25) that face one another and are in contact with one another, with the main manifolds (11, 12, 13, 14) and pre-manifolds (2) pressed together firmly and tightly by lateral spring elements (6), with the spring elements (6) permitting a limited movement of the main manifolds (11, 12, 13, 14) by overcoming the spring force.

2. A hot runner manifold system according to Claim 1, **characterized in that** at least two and preferably at least four separate main manifolds are provided, two of which are arranged on each of the two opposite long sides of an oblong pre-manifold (2).

3. A hot runner manifold system according to Claim 1 or 2, **characterized in that** the main manifolds (11, 12, 13, 14) and the pre-manifolds (2) are arranged inside a stable, surrounding frame (10), which serves as a support for the spring elements (6).

4. A hot runner manifold system according to one of the Claims 1 to 3, **characterized in that** each main manifold has, on one of its sides, a through-hole that is arranged centrally relative to that side.

5. A hot runner manifold system according to one of the Claims 1 to 4, **characterized in that** the pre-manifold (2) is a sliding fit in the lengthwise direction on the lateral surfaces (25) of the main manifolds (11, 12, 13, 14).

6. A hot runner manifold system according to one of the Claims 1 to 5, **characterized in that** the lateral through-holes lead via a channel (17) to the centre of the respective main manifold (11, 12, 13, 14), from where additional channels (19, 21, 23) lead to the injection nozzles or orifices in such a way that the flow path from the centre of the main manifold (11, 12, 13, 14) to all injection nozzles or orifices is substantially of equal length.

7. A hot runner manifold system according to one of the Claims 1 to 6, **characterized in that** it is designed as a mould for blanks of PET bottles.

8. A hot runner manifold system according to one of the Claims 1 to 7, **characterized in that** it is formed from at least two separate main manifolds (11, 12, 13, 14) with a common pre-manifold (2) and with at least two and preferably twenty-four or thirty-two injection orifices/nozzles per main manifold (11, 12, 13, 14).

9. A hot runner manifold system according to one of the Claims 1 to 7, **characterized in that** at least two main manifolds are provided, which have extensions or flanges (18) on opposite ends and substantially aligned with their opposite sides, with the pre-manifold (2) arranged between the opposite sides, and with the two main manifolds thus facing one another being held together by clamping bolts (16) that engage with the lateral flanges.

## Revendications

1. Système de distributeurs à canaux de chauffage pour moule de moulage par injection destiné à mouler simultanément par injection plusieurs pièces ou de grandes pièces, comportant une pluralité de buses resp. d'ouvertures d'injection (24) qui sont dimensionnées pour délivrer de la matière à mouler par injection simultanément dans des zones de moule prédéterminées sous pression élevée et à des températures élevées, les zones de moule étant prévues en partie au niveau de distributeurs principaux (11, 12, 13, 14), séparés les uns des autres, qui comportent des canaux de chauffage (17, 19, 21, 23) et qui sont reliés par des distributeurs d'entrée (2), qui comportent de leur côté des canaux dé chauffage (4, 7), à un culot d'injection (1 ) destiné à la matière de moulage d'injection,
**caractérisé en ce qu'**au moins une partie des distributeurs d'entrée (2) est disposée entre des distributeurs principaux voisins (11, 12, 13, 14), les canaux de chauffage (7, 17) des distributeurs d'entrée (2) et des distributeurs principaux (11, 12, 13, 14) débouchant dans les faces latérales (15, 25) dirigées l'une vers l'autre et en contact l'une avec l'autre et les distributeurs principaux (11, 12, 13, 14) et les distributeurs (2) d'entrée étant pressés les uns contre les autres de façon fixe et étanche par des éléments élastiques latéraux (6), les éléments élastiques (6) permettant, en surmontant la force élastique, un déplacement limité des distributeurs principaux (11, 12, 13, 14).

2. Système de distributeurs à canaux de chauffage selon la revendication 1, **caractérisé en ce qu'**il est prévu au moins deux, et avantageusement au moins quatre, distributeurs principaux séparés dont deux sont disposés sur les deux côtés longitudinaux opposés d'un distributeur d'entrée (2) de forme allongée.

3. Système de distributeurs à canaux de chauffage selon la revendication 1 ou 2, **caractérisé en ce que** les distributeurs principaux (11, 12, 13, 14) et les distributeurs d'entrée (2) sont placés à l'intérieur d'un cadre périphérique (10) stable qui sert de contre-pièce pour les éléments élastiques (6).

4. Système de distributeurs à canaux de chauffage selon l'une des revendications 1 à 3, **caractérisé en ce que** chaque distributeur principal présente sur l'un de ses côtés une ouverture de passage placée au centre par rapport à ce côté.

5. Système de distributeurs à canaux de chauffage selon l'une des revendications 1 à 4, **caractérisé en ce que** le distributeur d'entrée (2) porte contre les faces latérales (25) des distributeurs principaux (11, 12, 13, 14) de façon à pouvoir glisser dans la direction longitudinale.

6. Système de distributeurs à canaux de chauffage selon l'une des revendications 1 à 5, **caractérisé en ce que** les, ouvertures de passage latérales mènent par un canal (17) au centre du distributeur principal correspondant (11, 12, 13, 14) d'où partent d'autres canaux (19, 21, 23) en direction des buses resp. ouvertures d'injection de sorte que les chemins d'écoulement partant du centre du distributeur principal (11, 12, 13, 14) et allant vers toutes les buses resp. ouvertures d'injection ont sensiblement la même longueur.

7. Système de distributeurs à canaux de chauffage selon l'une des revendications 1 à 6, **caractérisé en ce qu'**il est conformé pour des ébauches de bouteilles PET.

8. Système de distributeurs à canaux de chauffage selon l'une des revendications 1 à 7, **caractérisé en ce qu'**il est constitué d'au moins deux distributeurs principaux séparés (11, 12, 13, 14) comportant un distributeur d'entrée commun (2), et **en ce qu'**il y a au moins deux, avantageusement vingt-quatre ou trente-deux, buses resp. ouvertures d'injection par distributeur principal (11,12, 13, 14).

9. Système de distributeurs à canaux de chauffage selon l'une des revendications 1 à 7, **caractérisé en ce qu'**il est prévu au moins deux distributeurs principaux qui comportent des prolongements resp. des rebords (18) aux extrémités opposées et sensiblement en alignement avec leurs côtés opposés, le distributeur d'entrée (2) étant disposé entre les côtés opposés et les distributeurs principaux dirigés l'un vers l'autre étant maintenus ensemble par des vis de serrage (16) s'engageant avec les rebords latéraux.
